# EUROPÄISCHE PATENTANMELDUNG

(11) **EP 2 759 829 A1**
(43) Veröffentlichungstag der Anmeldung: **30.07.2014**
(21) Anmeldenummer: 14000232.0
(22) Anmeldetag: 23.01.2014
(51) Int. Cl.: G01N 21/90, B29C 49/80

(54) **Fertigungsanlage zur Fertigung von Gefäßen aus Gefäßrohlingen und Fertigungsverfahren**

(30) Priorität: 24.01.2013 DE 102013001157
(71) Anmelder: Zind Systementwicklungs GmbH, 76229 Karlsruhe (DE)
(72) Erfinder: Zind, Oliver, 76229 Karlsruhe (DE)
(74) Vertreter: Drobnik, Stefanie

(57) **Zusammenfassung**

Die vorliegende Erfindung offenbart eine Fertigungsanlage (100) zur Fertigung von Gefäßen (10) aus Gefäßrohlingen (1), die wenigstens eine Vorrichtung (2) zur Fertigung der Gefäße (10) aus den Gefäßrohlingen (1) aufweist. Ferner hat die Fertigungsanlage (100) stromaufwärts der Gefäßfertigungsvorrichtung (2) eine Beschickungsvorrichtung (3), die vereinzelte Gefäßrohlinge (1) in die Gefäl3fertigungsvorrichtung (2) überführt. An der Beschickungsvorrichtung (3) ist eine optische Inspektionsvorrichtung (20) angeordnet, die eine Kamera (22) zur Aufnahme von Abbildungsdaten mit einer Lochinspektionsoptik (21) aufweist, die dazu ausgebildet ist, zumindest ein Beschaffenheitsmerkmal zumindest einer Rohlingswandung umfassend eine innere Mantelfläche (11'), einen Boden (12) und einen Rand (13) jedes Gefäßrohlings (1) abzubilden. Darüber hinaus wird ein Fertigungsverfahren zur Fertigung von Gefäßen (10) aus Gefäßrohlingen (1) offenbart.

## Beschreibung

Die nachfolgende Erfindung bezieht sich auf eine Fertigungsanlage zur Fertigung von Gefäßen aus Gefäßrohlingen, und auf ein Fertigungsverfahren, bei dem eine solche Fertigungsanlage verwendet wird.

Gefäße wie Dosen, Flaschen oder Tuben für Lebensmittel oder Kosmetika und anderes werden aus Qualitätssicherungsgründen des Inhalts vor ihrer Befüllung auf Produktionsfehler untersucht.

Produktionsfehler können auf unterschiedliche Weise entstehen: Bei Dosen etwa, die mittels bekannter Umformverfahren im Öffnungsbereich umgeformt werden, so dass am Dosenkopf eine Querschnittsverengung erreicht wird, auf die dann der Deckel aufgebördelt wird, können im Umformprozess Deformationen entstehen. Um festzustellen, ob der Umformprozess Schäden hinterlassen hat, werden die Dosen üblicher Weise nach der Fertigung inspiziert.

Bekannte Prüfverfahren nutzen dabei Bildaufnahmetechnologien, mit denen es möglich ist, den Kopfbereich und/oder einen äußeren Bördelrand der Dose frontal aufzunehmen. Weil diese Prüf- oder Inspektionsverfahren der Qualitätssicherung des Inhalts, des Gefäßes an sich oder seines Erscheinungsbildes dienen, wird es bis dato als hinreichend angesehen, solche Inspektionsvorrichtungen ans Ende der Fertigungsstraße zu setzen. Dies wird etwa in der DE 10 201 0032410 A1 offenbart.

Eine Inspektionsvorrichtung, die zum Abbilden der relevanten Flächen eines Gefäßes geeignet ist, wird durch die JP 2009 150767 A1 beschrieben. Dort können die Stirnfläche und die Innen-Mantelfläche eines Flaschenhalses mit einer Kamera inspiziert werden. Die Kamera ist dort in Verlängerung der Längsachse des Flaschenhalses angeordnet. Zwischen Kamera und Flasche ist ein Ringspiegel angeordnet, der es ermöglicht die Innenmantelfläche des Flaschenhalses zu beurteilen, indem der Strahlengang zur Kamera durch den Ringspiegel überkreuzt wird.

In der EP 1 826 556 A2 wird eine Prüfeinrichtung für zylindrische Hohlkörper beschrieben, die eine Kamera mit einem Objektiv und mit einer davor angeordneten Streulinse sowie einen in einer gemeinsamen Längsachse mit der Kamera und dem zylindrischen Hohlkörper angeordneten zylindrischen Umlenkspiegel aufweist. Auch dort wird der Strahlengang von dem Werkstück zur Kamera durch den Umlenkspiegel überkreuzt, sodass zumindest die Stirnfläche und die äußere und/oder die innere Mantelfläche abgebildet werden.

Die GB 1 182 413 A beschreibt eine Vorrichtung zur Inspektion einer Flasche von innen, wobei die Vorrichtung eine Kamera und eine Strahlungsquelle für nicht-sichtbare Strahlung (z. B. UV, IR), die die Innenfläche der Flasche bestrahlt, aufweist. Die Kamera soll von der nicht-sichtbaren Strahlung angeregte Fluoreszenzerscheinungen aufnehmen und so Defekte oder Verschmutzungen diagnostizieren. Das durch die Fluoreszenz erzeugte sichtbare Licht wird von einem Umlenkspiegel, der am Ende eines ausfahrbaren Schafts angebracht ist, zur Kamera geleitet.

Es kann bei der Fertigung von Dosen und/oder anderen Gefäßen jedoch bspw. vorkommen, dass bereits die Rohlinge so stark beschädigt sind, dass sie die Fertigungsmaschinen blockieren. Insbesondere, wenn ein Dosenrohling im Kopfbereich eine partiell stark erhöhte Wandstärke aufweist und/oder stark verbogen bzw. eingedellt ist. In diesen Fällen kann es passieren, dass die beschädigten Rohlinge in nachfolgenden Umformwerkzeugen, wie beispielsweise Gesenken oder umlaufenden Umformrollen, aufgrund der sehr genau dimensionierten Umformspalte verklemmen und so den Produktionsablauf einer ganzen Fertigungsstraße lahmlegen können, was mit hohen Kosten und Ausfallzeiten der Maschine verbunden ist.

Ausgehend von diesem Stand der Technik liegt der vorliegenden Erfindung die Aufgabe zu Grunde, eine verbesserte Fertigungsanlage zur Fertigung von Gefäßen aus Gefäßrohlingen zu schaffen, die weniger Stillstandszeiten aufweist und mit der geringere Stückkosten realisierbar sind.

Diese Aufgabe wird durch eine Fertigungsanlage zur Fertigung von Gefäßen aus Gefäßrohlingen mit den Merkmalen des unabhängigen Anspruchs 1 gelöst.

Darüber hinaus ergibt sich die Aufgabe, ein Fertigungsverfahren zur Fertigung von Gefäßen aus Gefäßrohlingen zu schaffen, mit dem es möglich ist, Stillstandszeiten aufgrund fehlerhafter Gefäßrohlingen zu vermeiden.

Diese Aufgabe wird durch ein Fertigungsverfahren zur Fertigung von Gefäßen aus Gefäßrohlingen mit den Merkmalen des unabhängigen Anspruchs 12 gelöst.

Bevorzugte Ausführungsbeispiele der Vorrichtung und des Verfahrens werden durch die Unteransprüche beschrieben.

Eine erste Ausführungsform einer erfindungsgemäßen Fertigungsanlage für Gefäße ("Gefäßfertigungsarilage") weist zumindest eine Vorrichtung zur Fertigung von Gefäßen aus den Gefäßrohlingen und stromaufwärts, also vor der Gefäßfertigungsvorrichtung, eine Beschickungsvorrichtung auf, die vereinzelte Gefäßrohlinge in die Gefäßfertigungsvorrichtung überführt. An der Beschickungsvorrichtung ist erfindungsgemäß nun eine optische Inspektionsvorrichtung angeordnet, mit der die einzelnen Gefäßrohlinge inspiziert werden. Die Inspektion dient der Untersuchung zumindest eines Beschaffenheitsmerkmals an zumindest einer Wand des Rohlings, wobei zumindest die innere Wandung, der obere Rand und der Boden jedes Gefäßrohlingsabgebildet werden.

Die Inspektionsvorrichtung umfasst eine Kamera, bevorzugt mit einer Lochinspektionsoptik, mit der Abbildungsdaten aufgenommen werden können. Die Lochinspektionsoptik bildet, je nach Anordnung, vorteilhaft die vorgenannten Wandungen, selbst die innere oder äußere Mantelfläche vollständig ab.

Unter "Gefäßrohling" werden hierin Vorprodukte zur Schaffung von Dosen, Tuben oder Flaschen (insbesondere aus Kunststoff) verstanden. Dabei meint "Rohling" hier das Vorprodukt bis hin zur Endfertigung: Also selbst der gebürstete, gebördelte oder anders vorbereitete Rohling ist, wenn er in der Fertigung noch nicht in der Waschvorrichtung war, hierin als Vorprodukt zu verstehen. Die Rohlinge verfügen meist über zumindest eine oder zwei Öffnungen, sind also napfförmige Rohlinge oder hohlzylindrische Rohlinge.

Mit ihren Öffnungen weisen die Rohlinge zur Inspektionsvorrichtung, sodass diese in die Rohlinge hinein blicken kann.

Eine Lochinspektionsoptik ist etwa ein spezielles Weitwinkelobjektiv, mit dem es möglich ist, die gesamte innere Wandung des Rohlings mit nur einem Objektiv bei frontaler Ausrichtung abzubilden. Dazu muss der Öffnungswinkel vergleichweise groß sein, was einen stark aufgespreizten Strahlengang bedeutet. Der Öffnungswinkel beträgt dabei üblicherweise mehr als 80°. Anhand einer solchen Abbildung des Inneren des Rohlings ist es möglich, Beschädigungen an der inneren Wandung, dem oberen Rand und am Boden mit Hilfe der selben Abbildung zu erkennen. Geeignete Objektive sind häufig so genannte "Pinhole-Optiken", die einen sehr kleinen Öffnungsquerschnitt aufweisen, um eine gute Tiefenschärfe zu erreichen. Ein solches Objektiv muss nicht in den Gefäßrohling eingetaucht werden, es kann zu jedem Zeitpunkt der Abbildungsaufnahme vollständig außerhalb des Rohlings positioniert bleiben und muss nicht verfahren werden, was die Inspektionsvorrichtung zudem kostengünstig macht, da auf aufwändige und anfällige mechatronische Systeme zum Verfahren der Kamera verzichtet werden kann.

In einer weiteren Ausführungsform kann die Inspektionsvorrichtung eine Verarbeitungseinheit zur Verarbeitung der aufgenommenen Abbildungsdaten und einen Speicher aufweisen. Im Speicher kann/können eine oder mehrere Referenzabbildung/en abgelegt sein. Die Verarbeitungseinheit zieht die Referenzabbildung/en zum Vergleich mit den aufgenommenen Abbildungsdaten nach vorbestimmten Kriterien heran, um daraus Aussonderungsinformationen zu erzeugen und auszugeben.

Als Referenzabbildungen können beispielsweise typische Fehler-Abbilder und/oder ein Soll-Abbild hinterlegt sein. Typische Fehler bei der Dosenfertigung betreffen Formfehler am Dosenkopf, Fehler der Lackierung, Kratzer innen oder außen, Fehler des Innenlacks und/oder Fehler, die beim Zuschnitt des Dosenkörpers auf die vorbestimmte Länge entstanden sind, beispielsweise Quetschungen, die zu partiell dünneren bzw. dickeren Wandstärken führen können, und somit besonders hohes Potential für einen Maschinenstopp bergen. Zur Beurteilung können etwa ungewöhnliche Reflexionen, Helligkeitsvortellungen, Farbveränderungen und/oder Veränderungen der Außenform vor dem (gleichbleibenden) Abbildungshintergrund verwendet werden. Algorithmen zum automatisierten Vergleich von Abbildungen sind Stand der Technik und weithin etabliert.

Mit der erfindungsgemäßen Fertigungsanlage können auch kleinste Schädigungen wie etwa Kratzer in Lacken innen oder außen oder winzige Dellen im Bördelrand, sogar Verschmutzungen oder Ablagerungen von Algen erkannt werden, was je nach den angelegten Kriterien zu einem Aussondern führen kann. Jedoch lassen sich die Abweichungen, die zu einem Aussondern führen, individuell anpassen, sodass vorgegeben werden kann, welche Qualität der Rohlinge zur Weiterverarbeitung zugelassen wird. Es ist etwa möglich, dass nur die Rohlinge ausgesondert werden, die zu einem Maschinenstopp oder zu einer Beeinträchtigung der Produktqualität führen. Aber auch Rohlinge, die zu einem Gefäß mit nur einer äußeren, unschönen Optik führen, können so im Vorfeld ausgesondert werden; sie bringen keine Weiterverarbeitungskosten mit sich.

Erfindungsgemäß ist es vorteilhaft, wenn die Inspektionsvorrichtung zu einem Abbildungsaufnahmezeitpunkt ortsfest in Bezug zur Förderrichtung des Gefäßrohlings angeordnet ist Die Beschickungsvorrichtung kann vorteilhaft getaktet betrieben werden, wobei in den Beschickungspausen die Längsachse des einzelnen Gefäßrohlings mit der Aufnahmeachse der Lochinspektionsoptik fluchtet. Zusätzlich oder alternativ kann die Inspektionsvorrichtung ortsfest mit der Beschickungsvorrichtung verbunden sein, was vorteilhaft mittels einer lösbaren Halterungsvorrichtung erreicht werden kann Alternativ dazu kann die Inspektionsvorrichtung oszillierend in und gegen die Förderrichtung der Beschickungsvorrichtung verfahren werden, wobei die Bewegung in Förderrichtung zumindest zeitweise mit einer momentanen Fördergeschwindigkeit der Beschickungsvorrichtung erfolgt.

Eine Beschickungsvorrichtung kann dabei jede geeignete Fördervorrichtung sein, mittels der der Rohling in der Fertigungsanlage in die erste und jede folgende Gefäßfertigungsvorrichtung, respektive Bearbeitungsmaschine, überführt wird. Dabei kann die Beschickung auch das Vereinzeln im ersten Schritt vorsehen. Es kann sich bei der Beschickungsvorrichtung um ein Zuführförderband oder ein Laufband handeln, das dazu geeignet ist, vereinzelte Gefäßrohlinge in die stromabwärts folgende Gefäßfertigungsvorrichtung zu transportieren.

Eine "Gefäßfertigungsvorrichtung" im Sinne der Erfindung kann eine Umformvorrichtung sein, die durchaus mehrstufig betreibbar ist; etwa eine Bördel- und/oder eine Tiefziehvorrichtung oder eine Presse, insbesondere eine Napfpresse. Eine Fertigungsstrasse kann etwa vorsehen, dass Rohmaterial, im Grunde auch als Rohling zu verstehen, in die Presse transportiert wird; nach Verlassen der Presse werden aus dem Rohmaterial gefertigte Rohlinge weiter transportiert (wieder mittels einer "Beschickungsvorrichtung" zu einer Beschneidevorrichtung (die quasi beschickt wird); nach Beschneiden erfolgt die Oberflächenbearbeitung in einer entsprechenden Vorrichtung, die eine Lackier- oder eine Beschichtungs- oder eine Reinigungsvorrichtung aber auch eine Bürstvorrichtung oder eine Waschmaschine sein kann. Bei jedem Bearbeitungsschritt einer der vorgenannten Maschinen, die beispielhaft und nicht abschließend aufgelistet sind, können Fehler entstehen; vom Kratzer hin bis zum Lackfehler oder zur Delle durch Verformung. Erfindungsgemäß ist es daher vorteilhaft, wenn vor der ersten Gefäßfertigungsvorrichtung; zwischen zwei aufeinander folgenden Gefäßvorrichtungen und auch danach, wenn das Gefäß fertig ist, eine erfindungsgemäße Inspektionsvorrichtung an der jeweiligen Beschickungsvorrichtung angeordnet ist.

Die Inspektionsvorrichtung bildet das jeweilige Gefäß ab, und wenn das erzeugte Abbild beim Vergleich einen Fehler zeigt, wird mittels einer Aussonderungsvorrichtung das qualitativ ungenügende Gefäß aus der Fertigungsstraße genommen.

Das Abbilden durch die Inspektionsvorrichtung kann hier mittels bekannter Abbildungstechnologien erfolgen, beispielsweise über lichtempfindliche Halbleitersensoren, insbesondere CMOS- oder CCD-Flächensensoren, oder Ober sonstige lichtempfindliche Schichten oder Abbildungsschirme. Die Begriffe "stromaufwärts" und "stromabwärts" werden hierin in Bezug zur Förderrichtung der Gefäßrohlinge in der Fertigungsanlage verstanden, d. h., stromabwärts ist die Richtung, in der die konsekutiven Bearbeitungsschritte ausgeführt werden.

Die vorliegende Erfindung ermöglicht es erstmalig und überraschend, beschädigte Gefäßrohlinge auszusondern, bevor sie in die erste Gefäßfertigungsvorrichtung eintreten. Dadurch kann teuren Maschinenstopps aufgrund eines potentiellen Verklemmens der beschädigten Rohlinge in Umformgesenken, Umformrollen oder anderen Umformwerkzeugen vorgebeugt werden. Es werden jedoch nicht nur mechanische Beschädigungen wie verbogene Ränder oder eingedellte Gefäßkörper erkannt, sondern auch fehlender oder fehlerhaft aufgebrachter Innenlack, in das Innere eingedrungener Außenlack, Fremdkörper bzw. Schmutz in den Rohlingen oder Fehler, die beim Beschneiden des Rohlings auftreten können. Das Aussondern bei jedem Zwischenfertigungsschritt wie Lackieren und Bürsten wird ermöglicht, so dass ein Fehler nicht zum Weiterbearbeiten des schadhaften Teils führt. Verklemmt sich ein mechanisch stark beschädigter Rohling etwa im Umformwerkzeug, bedeutete dies bisher, dass die gesamte Fertigungsstraße angehalten werden musste, um den verklemmten Rohling von Hand zu entfernen. Dieser Vorgang ist sehr zeitintensiv und es fallen neben den Personalksosten auch noch nicht unerhebliche Maschinenausfallkosten an. Die erfindungsgemäße Fertigungsanlage ermöglicht es hingegen, die Stillstandszeiten zu verringern und dadurch die Stückkosten der damit hergestellten Gefäße deutlich zu senken.

In dem Zeitpunkt, in dem sich die Inspektionsvorrichtung genau mit der Fördergeschwindigkeit der Beschickungsvorrichtung bewegt, ist sie ortsfest zum Gefäßrohling und dann kann auch die Abbildung mit optimaler Qualität aufgenommen werden. Die Taktung der Beschickungsvorrichtung kann sich schon aus der Anforderung der Gefäßfertigungsvorrichtung nach einer diskreten Zuführung von Gefäßrohlingen ergeben, wobei die Taktdauer bzw. die Länge der Beschickungspausen sich aus der notwendigen Bearbeitungszeit ergibt. Die Ausführungsform mit oszillierend mitbewegter Inspektionsvorrichtung ist zwar konstruktiv aufwändiger, dafür jedoch auch für kontinuierlich fördernde Beschickungsvorrichtungen geeignet.

Es ist darüber hinaus auch möglich, dass die Beschickungsvorrichtung kontinuierlich arbeitet und die Kamera ortsfest an der Beschickungsvorrichtung installiert ist. Bei einer hinreichend kurzen Belichtungsdauer ist dies ohne Weiteres auch möglich.

Des Weiteren kann stromabwärts der Inspektionsvorrichtung und stromaufwärts der Gefäßfertigungsvorrichtung, die dieser Inspektionsvorrichtung nachgeordnet ist, eine Aussonderungsvorrichtung angeordnet sein, die operativ mit der Inspektionsvorrichtung gekoppelt ist. Wenn die Aussonderungsvorrichtung eine von der Inspektionsvorrichtung beim Inspizieren eines Gefäßrohlings erzeugte Aussonderungsinformation erhält, sondert sie diesen Gefäßrohling aus der Fertigungsanlage aus.

Die Aussonderungsvorrichtung ist vorteilhaft in Förderrichtung zwischen der Inspektionsvorrichtung und der Gefäßfertigungsvorrichtung angeordnet sein. Damit es möglich ist, einen als fehlerhaft erkannten Rohling schon vor seinem Eintritt In die Gefäßfertigungsvorrichtung automatisiert auszusondern, was alternativ auch händisch geschehen könnte. Hier soll die Aussonderungsvorrichtung automatisiert das Aussondern des Gefäßes vornehmen. Natürlich könnte auch durch Menschenhand das Aussondern vorgenommen werden; vorteilhaft kann aber in dem rasch ablaufenden Prozess ein Roboter bzw. eine Maschine diesen Schritt ausführen.

Aussonderungsvorrichtungen sind aus dem Anlagenbau bestens bekannt; es kann beispielsweise eine gasdruckbetriebene Abblasvorrichtung oder Greifvorrichtung oder eine elektromechanische Vorrichtung zum Einsatz kommen.

Eine erfindungsgemäße Fertigungsanlage kann dadurch noch günstiger betrieben werden, da Personalkosten an der Vorsortierung der Rohlinge eingespart werden können.

Gemäß einer weiteren Ausführungsform kann die Inspektionsvorrichtung wenigstens eine Beleuchtungsvorrichtung aufweisen, die vorteilhafterweise ringförmig um die Lochinspektionsoptik angeordnet ist, wodurch es ermöglicht wird, die erfindungsgemäße Fertigungsanlage auch bei mäßigen Lichtverhältnissen zu betreiben und dabei dennoch kleinste Fehler der Rohlinge zu erkennen.

Bei den Gefäßrohlingen kann es sich um Dosenrohlinge, Kunststoffflaschenrohlinge, Becherrohlinge oder Tubenrohlinge handeln, die ihrerseits aus beliebigen Werkstoffen bestehen können. Die Rohlinge können in der Gefäßbearbeitungsmaschine, die insbesondere eine Einziehmaschine sein kann, durch Umformen zu den fertigen Gefäßen verarbeitet werden. Es ist nicht zwingend notwendig, dass die Gefäßbearbeitungsmaschine der erfindungsgemäßen Fertigungsanlage eine Umformmaschine ist, es kann sich dabei auch um eine Fügemaschine oder eine Maschine zur Oberflächenbehandlung handeln.

In Abhängigkeit der Ausrichtung der Gefäßbearbeitungsmaschine können die Rohlinge auf dem Förderband liegend, hängend oder stehend ausgerichtet sein und im Fall einer liegenden Aufnahme in individuellen Fördermulden aufgenommen sein. Diese Fördermulden bzw. Förderzangen sind vorteilhaft in vorbestimmten Abständen in Förderrichtung zueinander beabstandet, wodurch gleich der passende Abstand zur Überführung in die Gefäßfertigungsvorrichtung vorgegeben ist und die Gefäßrohlinge nicht herumrollen oder wackeln können, was eine gute Abbildungsqualität ermöglicht.

Eine erste Ausführungsform des Fertigungsverfahrens zur Fertigung von Gefäßen aus Gefäßrohlingen wird unter Verwendung einer erfindungsgemäßen Fertigungsanlage ausgeführt. Es umfasst die Schritte:
- Vereinzelt Überführen der Gefäßrohlinge in die zumindest eine Gefäßfertigungsvorrichtung mittels der Beschickungsvorrichtung,
- dabei Inspizieren zumindest eines Beschaffenheitsmerkmal zumindest einer Rohlingswandung umfassend eine innere Mantelfläche, einen Boden und einen Rand jedes Gefäßrohlings, dabei Abbilden derselben und Aufnehmen von Abbildungsdaten,
- Vergleichen der Abbildungsdaten anhand vorbestimmter Kriterien mit zumindest einer Referenzabbildung durch die Verarbeitungsvorrichtung der Inspektionsvorrichtung,
- wenn der Vergleich eine vorgegebene Abweichung überschreitet, Ausgeben eines Aussonderungssignals.

Die Kriterien, die zum Ausgeben des Aussonderungssignals führen, können im Rahmen einer Einlern- oder Einfahrphase für jede individuelle Fertigungsanlage und jeden Rohling-Typ bestimmt werden. Da jede Gefäßart ihre eigenen Fehlerarten und -häufigkeiten hat, ist das Festlegen dieser Kriterien ein wichtiger Schritt, um zu erreichen, dass die Fertigungsanlage möglichst stillstandsfrei betrieben werden kann.

Durch das vorliegende Verfahren sind die Voraussetzungen geschaffen, eine Fertigungsanlage mit sehr wenig oder ohne Stillstandszeiten aufgrund beschädigter Rohlinge zu betreiben, da diese bereits vor dem Eintritt in die Gefäßfertigungsmaschine ausgesondert werden. Für einen wirtschaftlichen Betrieb kann vorgesehen werden, dass nur Rohlinge ausgesondert werden, die so beschädigt sind, dass der Inhalt des Gefäßes nach Befüllen Schaden nehmen oder auslaufen kann.

Das Aussondern entsprechender Rohlinge kann auch durch Arbeiter erfolgen, während die Entscheidung, ob ausgesondert werden soll, anhand objektiver Kriterien erfolgt und nur das rein physische Aussondern händisch erledigt wird. Es ist auch möglich, bestehende Fertigungsanlagen zur Ausführung des erfindungsgemäßen Verfahrens umzurüsten. Dazu ist es lediglich notwendig, eine geeignete Inspektionsvorrichtung mit Lochinspektionsoptik an der Beschickungsvorrichtung vor dem Überführen der Rohlinge in die Gefäßfertigungsvorrichtung sowie eine Aussonderungsvorrichtung zu installieren. Es ist somit selbst bei bestehenden Anlagen eine erhebliche Kosteneinsparung und Produktionssteigerung durch geringere Stillstandszeiten möglich.

In einer weiteren Ausführungsform kann das Aussonderungssignal von der Inspektionsvorrichtung an die Aussonderungsvorrichtung übermittelt werden und das Aussondern des Gefäßrohlings durch die Aussonderungsvorrichtung vor dem Überführen in die Gefäßfertigungsvorrichtung ausgeführt werden.

Der Bezug auf die Figuren in der Beschreibung dient der Unterstützung der Beschreibung und dem erleichterten Verständnis des Gegenstands. Die Figuren sind lediglich schematische Darstellungen von Ausführungsbeispielen der Erfindung. Es zeigen:
- **Fig. 1**: eine schematische Ansicht einer Fertigungsanlage,
- **Fig. 2**: eine perspektivische Ansicht einer Beschickungsvorrichtung mit daran angeordneter Inspektionsvorrichtung,
- **Fig. 3a**: eine Schnittansicht einer Inspektionsvorrichtung mit daran angeordnetem Dosenrohling,
- **Fig. 3b**: eine schematische Draufsicht des Innenraums des Dosenrohlings durch die Lochinspektionsoptik,
- **Fig. 4a,b**: ein Bild, einmal als Fotografie und einmal als Zeichnung, der Mantelinnenfläche einer Dose mit einer mechanischen Beschädigung des Dosenrandes,
- **Fig. 5a,b**: ein Bild, einmal als Fotografie und einmal als Zeichnung, der Mantelinnenfläche einer Dose mit einem Innenlackfehler,
- **Fig. 6a,b**: ein Bild, einmal als Fotografie und einmal als Zeichnung, einer mechanischen Beschädigung eines Dosenrohlingkörpers,
- **Fig. 7**: ein Bild, einmal als Fotografie und einmal als Zeichnung, eines Beschneidefehlers im Kopfbereich eines Dosenrohlings,
- **Fig. 8**: ein Bild, einmal als Fotografie und einmal als Zeichnung, eines Innenlackfehlers eines Dosenrohlings.

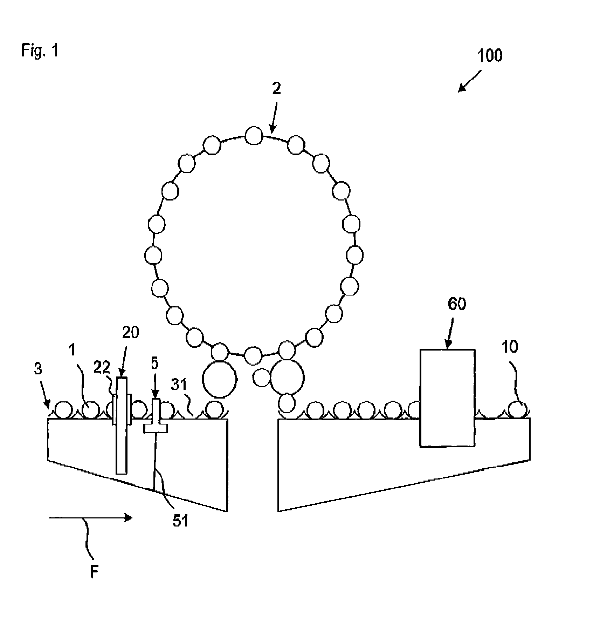

In **Fig. 1** ist eine erfindungsgemäße Fertigungsanlage 100 stark vereinfacht dargestellt. Mittig ist die Gefäßfertigungsvorrichtung 2 mit der Förderrichtung F zu sehen. In der Gefäßfertigungsvorrichtung 2 werden die Gefäßrohlinge 1 umlaufend gefördert, während dabei inkrementelle Bearbeitungsschritte, beispielsweise das Umformen eines Dosenkopfs zur Befestigung des Deckels, oder das Tiefziehen eines Gefäßes wie einer Dose, Tube oder Flasche, durchgeführt werden. Insbesondere kann es sich bei der Gefäßfertigungsvorrichtung 2 um eine Einziehmaschine handeln, mit der unter Anderem Aluminiumdosen und Aluminiumflaschen hergestellt werden können. Die Gefäßfertigungsvorrichtung 2 muss aber nicht unbedingt eine Umformmaschine sein. Unter "Fertigung" kann genauso das Anbringen einer Oberflächenbeschichtung, Glätten der Oberfläche, oder, im Falle einer Glasbearbeitung etwa Beschleifen oder jede andere Art der Nachbearbeitung eines Rohlings oder eines Vorformlings, der zu dem Gefäß geformt werden soll, verstanden werden.

Ferner können in einer Fertigungsstraße mehrere Gefäßfertigungsvorrichtungen zur Ausführung verschiedener Bearbeitungsschritte in Serie geschaltet und durch Fördermittel für das zu verarbeitende Gut miteinander verbunden sein.

Die Rohlinge 1 werden der Gefäßfertigungsvorrichtung 2 durch ein Förderband 3 zugeführt, das mit der Außenform der Rohlinge 1 korrespondierende Aufnahmemulden 31 aufweist, in denen jeweils ein Rohling 1 liegt, der dadurch nicht unbeabsichtigt gegen die Förderrichtung F verrutschen kann.

Stromaufwärts der Gefäßfertigungsvorrichtung 2 ist eine erste optische Inspektionsvorrichtung 20 angeordnet, an der die Rohlinge 1 durch das Förderband 3 vorbei geführt werden. Die Inspektionsvorrichtung 20 verfügt über eine Kamera 22 und eine Lochinspektionsoptik. Immer wenn die Längsachse eines Rohlings 1 mit der Längsachse der Lochinspektionsoptik fluchtet, wird eine Abbildung aufgenommen, auf der aufgrund des weiten Öffnungsquerschnitts der Lochinspektionsoptik die gesamte innere Wandung, der obere Rand und der Boden des Rohlings 1 erkennbar sind.

Alternativ kann auch die Außenwandung, etwa bei einer bedruckten Tube, oder nur die Öffnung, etwa nach Umbördeln, inspiziert werden.

Diese Aufnahmen können zur Beurteilung, ob es sich bei einem betreffenden Rohling 1 um ein Gutteil oder ein Ausschussteil handelt, herangezogen werden. Dazu hat die Inspektionsvorrichtung 20 einen Speicher, in dem entweder bekannte Fehler oder Soll-Abbildungen eines Gutteils gespeichert sein können. Eine Verarbeitungseinheit der Inspektionsvorrichtung 20 vergleicht diese hinterlegten Abbildungen mit der Abbildung des aktuellen Rohlings 1 und erzeugt bei Bedarf eine Aussonderungsinformation, die an die Aussonderungsvorrichtung 5 weitergeleitet wird. Die Aussonderungsvorrichtung 5 führt die Aussonderungsinformation aus, in dem der betroffene Rohling 1 in die Bildebene hinein vom Förderband 3 geblasen wird, es sind aber auch andere Aussonderungsvorrichtungen denkbar, beispielsweise elektromechanische Greifer oder Schieber. Darüber hinaus kann vorgesehen sein, stromaufwärts der Inspektionsvorrichtung 20 eine Positionierungsvorrichtung anzubringen, mit der die Dosen in eine geeignete Abbildungsaufnahmeposition gebracht werden können, was jedoch nicht figurativ gezeigt ist. Bei der Positionierungsvorrichtung kann es sich ebenso um eine Blasdüse handeln, die die Dosenrohlinge jedoch in eine aus der Bildrichtung heraus weisenden Richtung zur Kamera hin bewegt.

Die Kriterien für die Ausgabe einer Aussonderungsinformation, insbesondere die Grenzwerte, die bei einer Abweichung von der Soll-Abbildung zum Ausgeben der Aussonderungsinformation führen, können frei festgelegt werden, so dass, wenn ein gelegentlicher Stopp der Gefäßfertigungsvorrichtung 2 tolerierbar ist, deutlich weitere Grenzen gewählt werden können.

Nach dem Durchlaufen der letzten Gefäßfertigungsvorrichtung 2 werden die nunmehr fertigen Dosen 10 auf einem Abförderband 3 abgelegt, das auch entsprechende Aufnahmemulden 31 für die vereinzelte Aufnahme der Dosen 10 hat. Weiter stromabwärts kann eine letzte Inspektionsvorrichtung 60 zur Endkontrolle der gefertigten Dosen angeordnet sein. Es ist dabei nicht notwendig, aber möglich, dass die gleichen Flächen wie durch die erste Inspektionsvorrichtung 20 erneut geprüft werden. Es ist ferner denkbar, dass an dieser Stelle eine Prüfung von außen, insbesondere eines Bördelrands des Deckels und/oder des Druckbildes erfolgen kann. Die letzte Inspektionsvorrichtung 60 kann ebenso anhand bestimmter Kriterien Aussonderungsinformationen erzeugen, die dann von einer stromabwärts nachgeschalteten Aussonderungsvorrichtung ausgeführt werden.

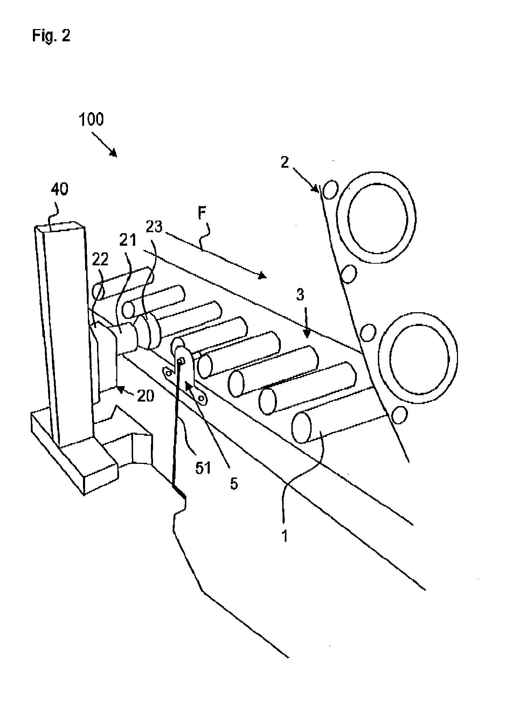

In **Fig. 2** ist der Bereich stromaufwärts einer Einziehmaschine 2 perspektivisch gezeigt. Die Dosenrohlinge 1 werden durch ein Förderband 3 der Einziehmaschine 2 zugeführt. Stromaufwärts ist zunächst die Inspektionsvorrichtung 20 angeordnet, die aus einer Kamera 22, einer Lochinspektionsoptik und einer um die Lochinspektionsoptik ringförmig angeordneten Beleuchtungsvorrichtung 23, die zur Öffnung des Dosenrohlings zeigt. So kann auch der Boden und der Umformbereich am Boden des Dosenrohlings 1 in guter Qualität mit ausreichendem Kontrast abgebildet werden. Die Inspektionsvorrichtung 20 ist mit einer Halterung 40 mit dem Maschinengrundkörper der Einziehmaschine 2 bzw. des Förderbands 3 verbunden und in der Höhe so ausgerichtet, dass sich die Längsachsen der Dosenrohlinge 1 und die optische Achse des Lochinspektionsobjektivs 21 beim Vorbeilaufen der Dosenrohlinge 1 schneiden. Zu diesem Zeitpunkt wird die Abbildung aufgenommen und dann mit den hinterlegten Referenzabbildungen verglichen. Wird ein Fehler festgestellt, der ein Aussonderungssignal auslöst, so wird die Abblasvorrichtung 5 aktiviert, die den betreffenden Dosenrohling 1 nach hinten parallel zur Begrenzungskontur der Aufnahmemulde vom Förderband 3 bläst. Bei der Abblasvorrichtung 5 handelt es sich um eine Druckluftdüse, die einfach an das örtliche Druckluftnetz 51 angeschlossen wird.

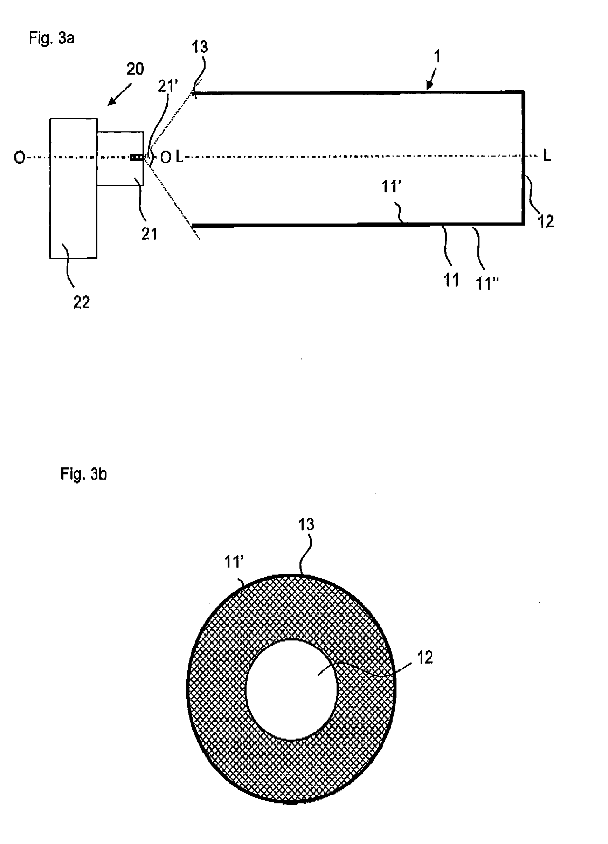

**Fig. 3a****.** zeigt einen Dosenrohling 1 und die Inspektionsvorrichtung 20 zum Abbildungsaufnahmezeitpunkt, in dem sich die Längsachse L des Dosenrohlings 1 und die optische Achse O des Lochinspektionsobjektivs 21 schneiden. Das Lochinspektionsobjektiv 21 ist ein Weitwinkelobjektiv mit einer sehr großen Tiefenschärfe, was wie angedeutet durch einen kleinen Öffnungsquerschnitt erreicht wird. Der Strahlengang des Objektivs 21 ist durch die Randstrahlen und den Öffnungswinkel 21' angedeutet. Es ist somit möglich anhand einer Aufnahme den Rand 13, die innere Mantelfläche 11' und den Boden 12 des Dosenrohlings 1 auf Beschädigungen oder Fremdkörper oder Lackfehler zu untersuchen.

Eine schematische, mit einer solchen Lochinspektionsoptik erzeugte Abbildung des Doseninneren ist in **Fig. 3b** dargestellt. Der Dosenrand 13 ist als äußere Begrenzungslinie sichtbar, während die innere Mantelfläche 11' in der Abbildung aufgrund des stark aufgespreizten Strahlengangs der Lochinspektionsoptik als Kreisring um den Boden 12 erscheint.

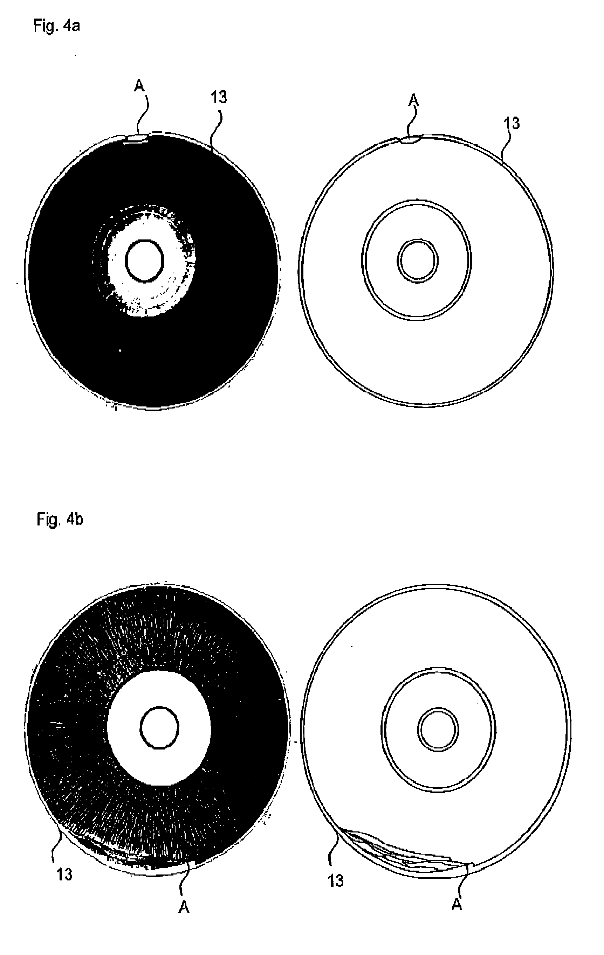

In den **Fig. 4** bis **Fig. 8** sind einige typische Fehler von Dösenrohlingen mittels Bildern, respektive Fotos dargestellt, die beim Testbetrieb der erfindungsgemäßen Fertigungsanlage erkannt wurden

In **Fig. 4a und Fig. 4b****,** die einmal als Fotografie und einmal als Zeichnung gezeigt sind, sind zwei unterschiedliche mechanische Beschädigungen A des oberen Randes 13 (siehe Fig. 3a) des Dosenrohlings dargestellt. Es ist gut zu erkennen, dass der Rand partiell zum Boden hin gestaucht ist, was in diesem Bereich auch eine Stauchung der Wandung zur Folge hat. Folgen wären in diesem Fall, dass der Rohling unter Umständen nach der Befüllung nicht richtig verschlossen werden kann oder dass eine daraus gefertigte Dose aufgrund der Stauchung der Wand über eine verringerte mechanische Belastbarkeit verfügt. Kritischer ist aber das Problem zu sehen, dass sich der Rohling in einer Umformmaschine wie einer Einziehmaschine, die den Dosenkopf zur Aufnahme des Deckels und/oder den Dosenkörpers formt, stecken bleiben könnte. Die einzelnen Umformschritte einer Einziehmaschine sind genau auf ein bestimmte Wandstärke dimensioniert; eine solche, im Schnitt S-förmige, Deformation kann leicht zu einem Verklemmen des Rohlings führen. Da die beiden in **Fig. 4a und Fig. 4b** dargestellten Beschädigungen typische Fehler für diesen Dosenrohling-Typ sind, können diese Abbildungen als Referenz-Abbildung in der Inspektionsvorrichtung hinterlegt werden.

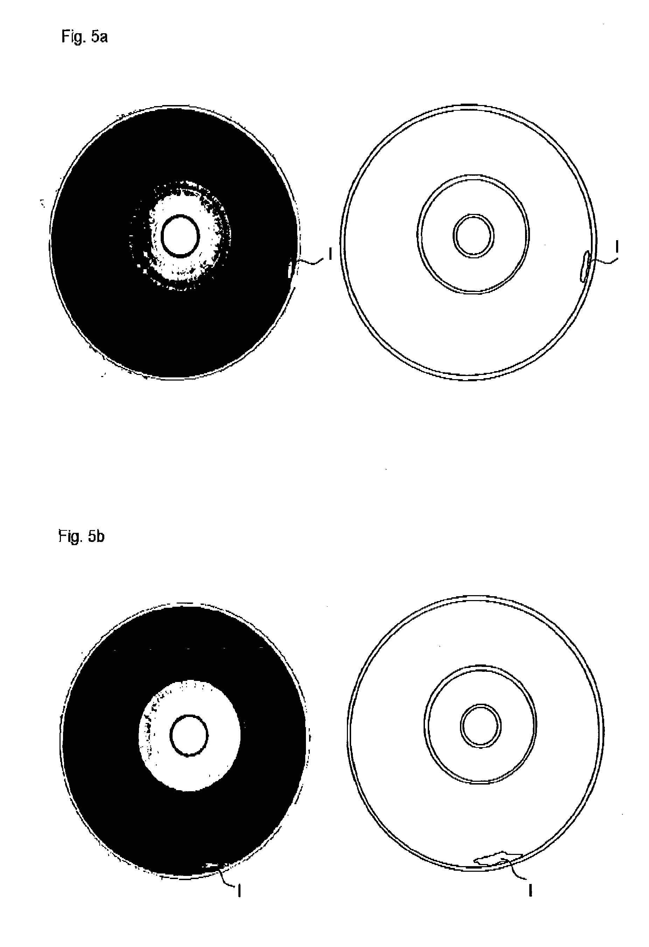

In **Fig. 5a** und **Fig. 5b****,** die einmal als Fotografie und einmal als Zeichnung gezeigt sind, ist eine weitere typische Fehlerart dargestellt. Dabei handelt es sich um Fehler bei der Innenlackierung I. Die Innenlackierung erfüllt bei Dosen und ähnlichen Behältnissen für Lebensmittel, Kosmetika oder chemischen Erzeugnissen eine wichtige Funktion als Korrosionsschutz. Ist der Innenlack wie dargestellt beschädigt, so ist es in der Regel nach dem Formen der Dose in einer Einziehmaschine nicht mehr möglich, die Innenlackfehler I nachträglich überhaupt zu erkennen oder gar den Innenlack auszubessern. Auch wenn Dosenrohlinge mit Innenlackfehler nicht zwingend zu einem Maschinenstillstand führen, sollten sie dennoch erkannt und ausgesondert werden, um zu verhindern, dass sie befüllt werden.

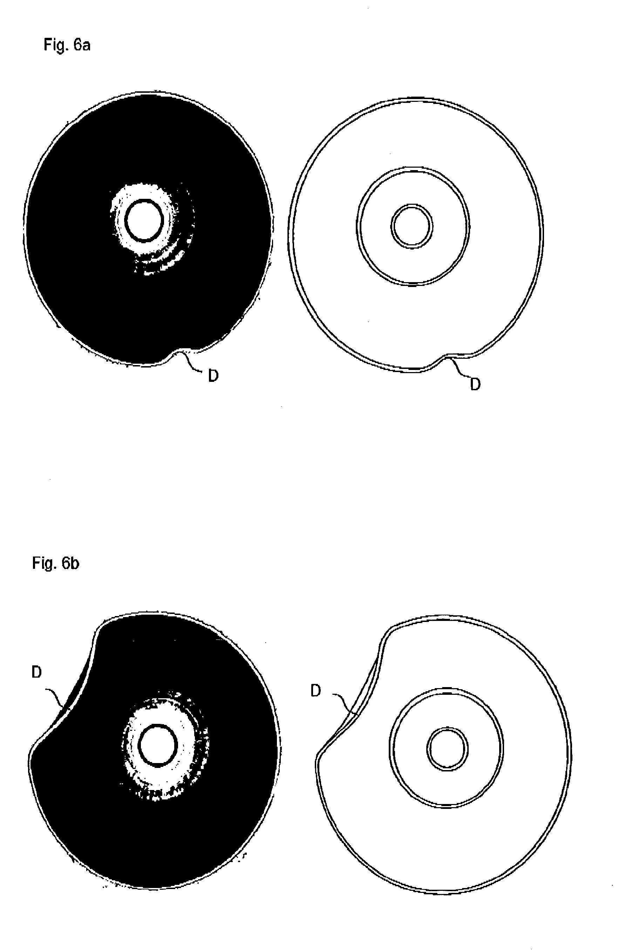

**Fig. 6a** und **Fig. 6b****,** die einmal als Fotografie und einmal als Zeichnung gezeigt sind, zeigen zwei Dosenrohlinge, die im oberen Bereich stark eingedellt sind (siehe D). Derart beschädigte Rohlinge verursachen die beschriebenen Probleme in der Einziehmaschine und haben das Potential, eine gesamte Fertigungsstraße zeitweise lahmzulegen.

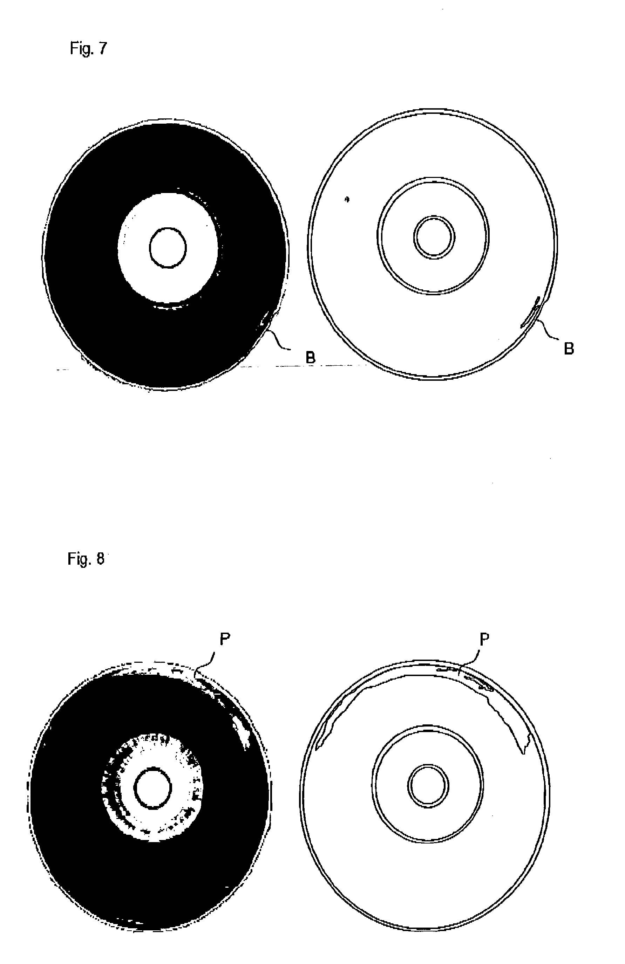

**Fig. 7****,** die einmal als Fotografie und einmal als Zeichnung gezeigt ist, zeigt einen Dosenrohling, der nicht ordnungsgemäß beschnitten wurde. Im fehlerhaften Bereich B ist die Wandung des Dosenrohlings partiell dünner und läuft schneidenartig zu, was an einer in diesem Bereich verminderten Reflexion zu erkennen ist.

Neben Fehlern bei der Innenlackierung I (siehe **Fig. 5a****, b**) können auch Fehler der Außenlackierung auftreten, die die innere Mantelfläche des Dosenrohlings betreffen. Dies ist in **Fig. 8****,** die einmal als Fotografie und einmal als Zeichnung gezeigt ist, dargestellt. Bei der Außenlackierung kann es vorkommen, dass Lack in das Innere des Dosenrohlings hineinläuft und im oberen Bereich der inneren Mantelfläche antrocknet. Ein derartiger Fehler P kann dazu führen, dass die Dosenfüllung durch den, chemisch eigentlich nicht für den Kontakt mit der Füllung geeigneten, Außenlack kommt und Qualitätseinbußen erfährt. Es ist aber auch möglich, wenn die Lackschicht entsprechend dick ist, dass oben beschriebene Probleme in der Einziehmaschine auftreten.

## Patentansprüche

1. Fertigungsanlage (100) zur Fertigung von Gefäßen (10) aus Gefäßrohlingen (1), die
- zumindest eine Vorrichtung (2) zur Fertigung der Gefäße (10) aus den Gefäßrohlingen (1) und
- stromaufwärts der zumindest einen Gefäßfertigungsvorrichtung (2) eine Beschickungsvorrichtung (3) aufweist, die vereinzelte Gefäßrohlinge (1) in die zumindest eine Gefäßfertigungsvorrichtung (2) überführt,
**dadurch gekennzeichnet, dass**
an der Beschickungsvorrichtung (3) eine optische Inspektionsvorrichtung (20) zum einzelnen Inspizieren der Gefäßrohlinge (1) angeordnet ist,
wobei die optische Inspektionsvorrichtung (20) eine Kamera (22) zur Aufnahme von Abbildungsdaten mit einer Lochinspektionsoptik (21) aufweist, die dazu ausgebildet ist,
zumindest ein Beschaffenheitsmerkmal zumindest einer Rohlingswandung umfassend eine innere Mantelfläche (11'), einen Boden (12) und einen Rand (13) jedes Gefäßrohlings (1) abzubilden.

2. Fertigungsanlage (100) nach Anspruch 1,
**dadurch gekennzeichnet, dass**
die Inspektionsvorrichfung (2) eine Verarbeitungseinheit zur Verarbeitung der aufgenommenen Abbildungsdaten und einen Speicher aufweist, in dem zumindest eine Referenzabbildung abgelegt ist, wobei die Verarbeitungseinheit dazu ausgebildet ist, die zumindest eine Referenzabbildung mit den aufgenommenen Abbildungsdaten nach vorbestimmten Kriterien zu vergleichen und Aussonderungsinformationen zu erzeugen und auszugeben.

3. Fertigungsanlage (100) nach Anspruch 1 oder 2,,
**dadurch gekennzeichnet, dass**
- die zumindest eine Inspektionsvorrichtung (20) zu einem Abbildungsaufnahmezeitpunkt ortsfest in Bezug zur Förderrichtung des Gefäßrohlings (1) angeordnet ist, wobei bevorzugt
- die Beschickungsvorrichtung (3) getaktet ist, wobei in den Beschickungspausen die Längsachse (L) des einzelnen Gefäßrohlings (1) mit einer Aufnahmeachse (O) der Lochinspektionsoptik (21) fluchtet und/oder
- die Inspektionsvorrichtung (20) ortsfest mit der Beschickungsvorrichtung (3) verbunden ist, besonders bevorzugt mittels einer Halterungsvorrichtung (40) lösbar verbunden ist, oder
- die Inspektionsvorrichtung (20) oszillierend in und gegen die Förderrichtung (F) der Beschickungsvorrichtung (3) verfahrbar ist, wobei die Bewegung in Förderrichtung (F) zumindest zeitweise mit einer momentanen Fördergeschwindigkeit der Beschickungsvorrichtung (3) erfolgt.

4. Fertigungsanlage (100) nach zumindest einem der Ansprüche 1 bis 3,
**dadurch gekennzeichnet, dass**
stromabwärts der Inspektionsvorrichtung (20) und stromaufwärts der zumindest einen Gefäßfertigungsvorrichtung (2) eine Aussonderungsvorrichtung (5) angeordnet ist, die operativ mit der Inspektionsvorrichtung (20) gekoppelt ist und dazu ausgebildet ist, bei Erhalt einer Aussonderungsinformation, die von der Inspektionsvorrichtung (20) beim Inspizieren eines Gefäßrohlings (1) erzeugt wird, diesen Gefäßrohling (1) aus der Fertigungsanlage (100) auszusondern.

5. Fertigungsanlage (100) nach zumindest einem der Ansprüche 1 bis 4,
**dadurch gekennzeichnet, dass**
die Inspektionsvorrichtung (20) zumindest eine Beleuchtungsvorrichtung (23) aufweist, die bevorzugt ringförmig um die Lochinspektionsoptik (21) angeordnet ist.

6. Fertigungsanlage (100) zumindest einem der Ansprüche 1 bis 5,
**dadurch gekennzeichnet, dass**
der Gefäßrohling (1) ein Dosenrohling, ein Kunststoffflaschenrohling oder ein Tubenrohling ist.

7. Fertigungsanlage (100) zumindest einem der Ansprüche 1 bis 6,
**dadurch gekennzeichnet, dass**
die Beschickungsvorrichtung (3) ein Zuführförderband oder ein Laufband aufweist, das die vereinzelten Gefäßrohlinge (1) in die stromabwärts folgende Gefäßfertigungsvorrichtung (2) überführt.

8. Fertigungsanlage (100) nach zumindest einem der Ansprüche 1 bis 7.
**dadurch gekennzeichnet, dass**
die Gefäßfertigungsvorrichtung (2) zumindest
- eine Umformvorrichtung, bevorzugt eine mehrstufige Umformvorrichtung, ist, wobei die Umformvorrichtung insbesondere eine Bördelund/oder eine Tiefziehvorrichtung oder eine Presse, insbesondere eine Napfpresse ist und/oder
- eine Beschneidevorrichtung, und/oder
- eine Oberflächenbearbeitungsvorrichtung, insbesondere eine Lackier- oder eine Beschichtungs- oder eine Reinigungsvorrichtung, insbesondere eine Bürstvorrichtung oder eine Waschmaschine ist.

9. Fertigungsanlage (100) nach zumindest einem der Ansprüche 1 bis 8,
**dadurch gekennzeichnet, dass**
stromabwärts der letzten der Gefäßfertigungsvorrichtungen (2), aus der die gefertigten Gefäße (10) ausgegeben werden
- eine Abfördervorrichtung, bevorzugt ein Abförderband, angeordnet ist und/oder
- eine Inspektionsvorrichtung (6) zur Prüfung der fertigen Gefäße (10) angeordnet ist.

10. Fertigungsanlage (100) nach zumindest einem der Ansprüche 1 bis 9,
**dadurch gekennzeichnet, dass**
die Fertigungsanlage eine Fertigungsstraße ist, in der eine Vielzahl von Gefäßfertigungsvorrichtungen (2) vorliegt, wobei zwischen zwei benachbarten Gefäßfertigungsvorrichtungen (2) eine Beschickungsvorrichtung (3) zur Beschickung der stromabwärts liegenden Gefäßfertigungsvorrichtung (2) mit den Gefäßrohlingen (1), die die stromaufwärtsliegende Gefäßfertigungsvorrichtungen (2) verlassen, angeordnet ist, und wobei stromaufwärts der ersten Gefäßfertigungsvorrichtung (2) eine Beschickungsvorrichtung (3), und stromabwärts der letzten Gefäßfertigungsvorrichtung (2) die Abfördervorrichtung angeordnet ist, und wobei an zumindest zwei der Beschickungsvorrichtungen (3) und/oder an der Abfördervorrichtung eine Inspektionsvorrichtung (20) und eine Aussonderungsvorrichtung (5) angeordnet sind.

11. Fertigungsverfahren zur Fertigung von Gefäßen (10) aus Gefäßrohlingen (1) unter Verwendung einer Fertigungsanlage (100) nach zumindest einem der Ansprüche 2 bis 10,
**umfassend die Schritte:**
- Vereinzelt Überführen der Gefäßrohlinge (1) in die Gefäßfertigungsvorrichtung (2) mittels der Beschickungsvorrichtung (3),
- dabei Inspizieren zumindest eines Beschaffenheitsmerkmal zumindest einer Rohlingswandung umfassend eine innere Mantelfläche (11'), einen Boden (12) und einen Rand (13) jedes Gefäßrohlings (1), dabei Abbilden derselben und Aufnehmen von Abbildungsdaten,
- Vergleichen der Abbildungsdaten anhand vorbestimmter Kriterien mit zumindest einer Referenzabbildung durch die Verarbeitungsvorrichtung der Inspektionsvorrichtung (20),
- wenn der Vergleich eine vorgegebene Abweichung überschreitet, Ausgeben eines Aussonderungssignals.

12. Fertigungsverfahren nach Anspruch 11,
das die Schritte
- Übermitteln des Aussonderungssignals von der Inspektionsvorrichtung (20) an die Aussonderungsvorrichtung (5),
- Aussondern des Gefäßrohlings (1) durch die Aussonderungsvorrichtung (5) vor dem Überführen in die stromabwärts der Ausgangsvorrichtung angeordnete Gefäßfertigungsvorrichtung (2),
umfasst.
